# EUROPÄISCHE PATENTANMELDUNG

(11) **EP 1 203 678 A2**
(43) Veröffentlichungstag der Anmeldung: **08.05.2002**
(21) Anmeldenummer: 01125706.0
(22) Anmeldetag: 27.10.2001
(51) Int. Cl.: B60J 5/00

(54) **Gussteil als Krafteinleitungsstelle zur Befestigung einer tragenden Struktur für Karosseriebauteile**

(30) Priorität: 03.11.2000 DE 10054493
(71) Anmelder: Bayerische Motoren Werke Aktiengesellschaft, 80809 München (DE)
(72) Erfinder: Plaum, Michael, 85256 Vierkirchen (DE)

(57) **Zusammenfassung**

Es sind Karosseriebauteile bekannt, deren tragende Struktur durch ein Innenblech und ein Außenblech gebildet ist. Karosseriebauteile sind Fahrzeugtüren, Heckklappen, Kofferraumdeckel und Motorhauben. Das neue Karosseriebauteil soll leicht bauen.

Dazu werden für das Innenblech (**4**) und das Außenblech (**5**) Bleche verwendet, die so dünn sind, dass die Kräfte beispielsweise am Scharnier oder Schloss großflächig verteilt werden müssen, um Deformationen zu vermeiden. Dazu werden diese Krafteinleitungsstellen als Gussteile (**7**) ausgeführt. Die Gussteile (**7**) sind an Aussparungen des Innenblechs (**4**) oder Außenblechs (**5**) angebracht. Die Gussteile (**7**) können für die jeweilige Krafteinleitungsstelle von der Form und Steifigkeit her optimal gestaltet werden.

## Beschreibung

Die Erfindung betrifft ein Karosseriebauteil in Leichtbauweise gemäß dem Oberbegriff des Patentanspruchs 1, wie Fahrzeugtüren, Heckklappen, Kofferraumdeckel und Motorhauben.

Aus der EP 0 803 389 A2 ist eine Fahrzeugtür in Leichtbauweise bekannt. Die darin beschriebene Fahrzeugtür besteht aus einem Tragrahmen, der im wesentlichen aus Strangpressprofilen und zwei großen vertikalen Trägern aus Leichtmetall-Gussteilen besteht. Dieser Tragrahmen wird innen und außen verkleidet. Diese Verkleidung ist außen üblicherweise ein Blech.

Aus der DE 195 18 300 A1 ist eine Fahrzeugtür mitTüraußenblech, Türinnenblech, Innenverkleidung und Bauteilträger für das Türschloss sowie andere Funktionselemente bekannt. An dem Bauteilträger sind möglichst viele der im Türinnenraum zwischen Türaußenblech und Türinnenblech üblicherweise untergebrachten Funktionselemente befestigt.

Aus der DE 195 34 127 A1 ist ein als Türinnenblech ausgebildetes Trägerblech bekannt, das aus Blechteilen unterschiedlicher Dicke und / oder unterschiedlichen Materials mittels eines thermischen Fügeverfahrens zusammengefügt ist. Die besonders stark beanspruchten Zonen, wie im Schlossbereich und in den Scharniergelenkbereichen, sind dicker oder mit einem Werkstoff höherer Festigkeit ausgeführt als die übrigen Bereiche.

Aufgabe der Erfindung ist es, ein Karosseriebauteil in Leichtbauweise zu schaffen.

Diese Aufgabe wird durch die Merkmale des Patentanspruchs 1 gelöst.

Die tragende Struktur des Karosseriebauteils ist durch ein Innenblech und ein Außenblech gebildet. Das Innenblech oder Außenblech allein ist so dünn, dass die Kräfte an den Krafteinleitungsstellen großflächig verteilt werden müssen, um plastische Verformungen zu vermeiden. Vorteilhafterweise ist an mindestens einer Krafteinleitungsstelle das Innenblech oder das Außenblech ausgespart. An der Aussparung ist ein Gussteil zur großflächigen Krafteinleitung befestigt. Krafteinleitungsstellen befinden sich unter anderem bei Scharnieren, Schlössern, Rückspiegeln, Griffen, Fensterhebern, etc. Das Gussteil leitet die Kräfte nun so großflächig in das Innenblech oder Außenblech ein, dass es keine plastische Verformung gibt. Durch eine solche Gestaltung eines Karosseriebauteils muss die Blechdicke nicht mehr nach lokalen Spitzenbelastungen ausgelegt werden. Diese werden durch das Gussteil soweit verteilt, dass deutlich dünnere Blechdicken ausreichen. Damit kann das Gewicht des Karosseriebauteils reduziert werden. Das Gussteil kann für die jeweilige Krafteinleitungsstelle von der Form und Steifigkeit her optimal gestaltet werden.

Zusätzlich wird das Gewicht noch dadurch reduziert, dass das Blech für das Gussteil passend ausgeschnitten wird. Das Gussteil wird seitlich mit der Blechkante der ausgeschnittenen Aussparung verbunden. Die Befestigung des Gussteils an der Aussparung des Blechs kann beispielsweise durch Nieten, Toxen, Schweißen, Clinchen, Schrauben, Kleben erfolgen. Durch das nachträgliche Anbringen der Gussteile können Zusammenbautoleranzen des Karosseriebauteils und Herstelltoleranzen des Innenblechs oder des Außenblechs kompensiert werden. So kann bei der Produktion eine hohe Prozesssicherheit erreicht werden.

Im Gegensatz zur EP 0 803 389 A2 sind die Gussteile relativ klein und erstrecken sich nicht über einen großen Teil der Höhe oder Länge des Karosseriebauteils. Aufgrund der geringen Größe sind die erfindungsgemäßen Gussteile preiswert.

Bei einer vorteilhaften Ausgestaltung besteht das Innenblech und / oder Außenblech aus Leichtmetall. Typische Leichtmetalle sind zum Beispiel Aluminium, Magnesium, Titan, bzw. Legierungen dieser Metalle. Durch die Verwendung solcher Materialen kann das Gewicht des Karosseriebauteils noch weiter reduziert werden.

Als Gussteile sind Druckgussteile aus Leichtmetall geeignet. Diese haben eine hohe Festigkeit und eine hohe Steifigkeit bei einem dafür relativ geringen Gewicht. Ferner bieten Druckgussteile viele Möglichkeiten in der Gestaltung, die bei einer reinen Blechkonstruktion nicht darstellbar wären. So können Stege zur Verstärkung angegossen werden, ferner sind variierende Wandstärken möglich, scharfe Kanten und eingegossene Bohrungen können dargestellt werden. Bei der Verwendung von Aluminium als Werkstoff können die Gussteile auch im Aluminium-Thixo-forming Verfahren hergestellt werden.

Alternativ zu Druckgussteilen aus Leichtmetall sind auch Kunststoffspritzgussteile gut geeignet. Insbesondere verstärkte Kunststoffe erreichen annähernd vergleichbare Festigkeiten wie Leichtmetalle, weisen aber ein geringeres spezifisches Gewicht auf.

Idealerweise haben die erfindungsgemäßen Gussteile neben der Krafteinleitung zugleich noch mindestens eine weitere Funktion. Sie können beispielsweise zugleich als ein Teil eines Scharniers, eines Schlosses, eines Rückspiegels, eines Griffs oder eines Fensterhebers ausgeführt sein. Dies reduziert die Anzahl der erforderlichen Einzelteile für das Karosseriebauteil und senkt so die Material- und Montagekosten. Darüber hinaus kann das Erscheinungsbild des Karosseriebauteils verbessert werden, da so unter anderem auch im Innenblech versenkte Scharniere realisierbar sind.

In der Zeichnung ist ein Ausführungsbeispiel der Erfindung dargestellt, das im Folgenden näher beschrieben wird. Es zeigen in schematischer Darstellungsweise:
- **Fig.** 1: eine räumliche Ansicht eines Teils einer Fahrzeugtür und
- **Fig.** 2: einen Schnitt in der Z-Ebene durch den in **Fig.** 1 dargestellten Teil einer Fahrzeugtür.

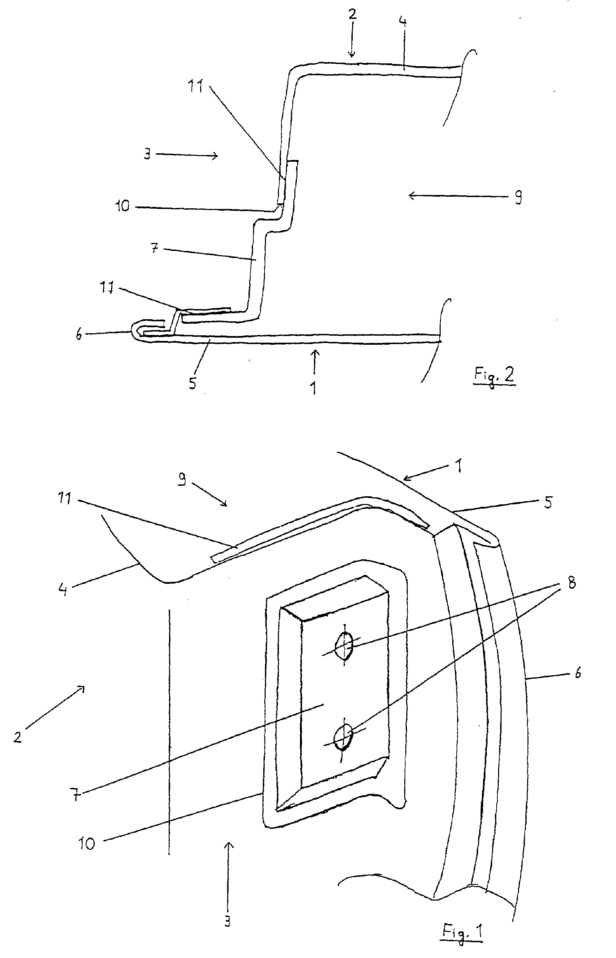

**Fig.** 1 zeigt eine räumliche Ansicht eines Teils einer vorderen Seite einer Fahrzeugtür im Bereich der Anbringung eines nicht dargestellten Türscharniers. Dargestellt ist eine Türaußenseite 1, eine Türinnenseite 2 und eine schmale Vorderseite 3 der Fahrzeugtür. Die tragende Struktur der Fahrzeugtür wird durch ein Türinnenblech 4 und ein Türaußenblech 5 gebildet, das jeweils aus Aluminium hergestellt ist. An der Vorderkante 6 ist dasTüraußenblech 5 um das Türinnenblech 4 umgebördelt. Das nicht dargestellte Türscharnier ist etwa mittig an der Vorderseite 3 der Fahrzeugtür an ein Gussteil 7 aus Aluminiumdruckguss angeschraubt. In dem Gussteil 7 sind dafür zwei Bohrungen 8 vorgesehen.

Wie in **Fig.** 2 erkennbar ist, ist das Gussteil 7 vom Türinnenraum 9 der Fahrzeugtür aus durch eine Aussparung 10 im Türinnenblech 4 durchgesteckt und mit einem Flansch 11 innen am Türinnenblech 4 angeklebt. Dabei kann das Gussteil 7 exakt in die gewünschte Position gebracht werden und so Zusammenbautoleranzen der Fahrzeugtür und Herstelltoleranzen des Türinnenblechs 4 oder Türaußenblechs 5 kompensieren.

Beispielsweise bei einem Fahrzeug-Crash entstehen hohe Kräfte an den Krafteinleitungsstellen der Fahrzeugtür, wie an einer Anbindung von Türscharnieren oder eines Türschlosses. Die Kräfte eines Türscharniers werden in das hier dargestellte Gussteil 7 eingeleitet. Das Gussteil 7 verteilt die Kräfte nun auf den Flansch 11. Über die gesamte Fläche dieses Flansches 11, der mit dem Türinnenblech 4 verbunden ist, werden die Kräfte großflächig in das Türinnenblech 4 eingeleitet.

## Patentansprüche

1. Karosseriebauteil, das aus einem Innenblech und einem Außenblech besteht, die zusammen die tragende Struktur bilden, **dadurch gekennzeichnet, dass** an mindestens einer Krafteinleitungsstelle das Innenblech (**4**) und / oder Außenblech (**5**) ausgespart ist, und dass an der Aussparung (**10**) ein Gussteil (**7**) zur großflächigen Krafteinleitung befestigt ist.

2. Karosseriebauteil nach Anspruch 1, **dadurch gekennzeichnet, dass** das Innenblech (**4**) und / oder das Außenblech (**5**) aus einem Leichtmetall ist.

3. Karosseriebauteil nach Anspruch 1 oder 2, **dadurch gekennzeichnet, dass** mindestens ein Gussteil (**7**) ein Druckgussteil aus Leichtmetall ist.

4. Karosseriebauteil nach Anspruch 1 oder 2, **dadurch gekennzeichnet, dass** mindestens ein Gussteil (**7**) ein Kunststoffspritzgussteil ist.

5. Karosseriebauteil nach einem der vorhergehenden Ansprüche, **dadurch gekennzeichnet, dass** mindestens ein Gussteil (**7**) zugleich ein Teil eines Scharniers, eines Schlosses, eines Rückspiegels, eines Griffs oder eines Fensterhebers bildet.
